# EUROPEAN PATENT APPLICATION

(11) **EP 0 862 186 A1**
(43) Date of publication of application: **02.09.1998**
(21) Application number: 98102917.6
(22) Date of filing: 19.02.1998
(51) Int. Cl.: G21C 3/322

(54) **Nuclear fuel assembly with variable central water channel moderation**

(30) Priority: 28.02.1997 US 808727
(71) Applicant: Siemens Power Corporation, Richland, WA 99352-0130 (US)
(72) Inventor: Farawila, Yousef M., Richland, WA 99352 (US)
(74) Representative: Kahlhöfer, Hermann, Dipl.-Phys.

(57) **Abstract**

A method and associated apparatus for at disabling the central water channel of a BWR fuel assembly in the first one or two cycles of reactor operation when the moderation is not advantageous and for restoring the central water channel in the remaining cycles of reactor operation when the central water channel achieves the desired reactivity enhancement. The method comprises at least partially blocking moderator from flowing through the central water channel during a first phase of reactor operation and subsequently opening the central water channel to permit a greater degree of moderator flow through the central water channel during a second phase of reactor operation.

## Description

### Background of the Invention

This invention relates to a nuclear fuel assembly in a nuclear reactor. More particularly, this invention relates to apparatus in a boiling water reactor (BWR) fuel assembly and to an associated method for controlling the moderating action of the coolant moderator within in the fuel assembly.

In nuclear reactors intended for the generation of power, nuclear fuel assemblies are customarily of the rod type in which nuclear fuel rods are typically arranged in closely spaced arrays in generally square configurations. Each fuel rod assembly for a boiling water reactor (BWR) is typically enclosed by a generally square outer channel. Inside the outer channel, the elongate nuclear fuel rods extend parallel to each other between a lower tie plate and an upper tie plate. Typically, a central or inner water channel and/or water rods also extend parallel to the fuel rods between the lower tie plate and the upper tie plate. The central water channel and water rods have the intended function of moderating neutron energies by slowing down the neutrons so that a greater portion of the neutrons emitted in the fission process have an energy suitable for further fissioning of fuel.

At the bottom of the nuclear fuel rod assembly, where the coolant moderator, i.e., water, enters the outer channel, the coolant has a temperature at or slightly below its saturation temperature. As the coolant flows upward through the assembly, power is transferred from the fuel rods to the coolant. Steam is produced and the fraction of steam in the coolant is increased. At the top of the fuel assembly, the coolant is primarily steam and, as a result of the high volume fraction of steam in the upper region of the reactor core, the upper region of the core becomes undermoderated and overenriched owing to a sparsity of hydrogen atoms in comparison with the number of fissionable uranium or plutonium atoms. As a consequence, there is less than optimum uranium utilization.

The central or inner water channel for the guidance of coolant moderator along a vertical path through the nuclear fuel assembly is physically spaced from the fuel rods and can have virtually any cross-sectional area or geometry and typically has a square or cruciform cross-sectional area. Alternatively, it can take the form of one or an array of hollow circular tubes or rods extending along the length of the fuel assembly. These and other configurations for a central water channel are disclosed in U.S. Patents 5,247,552 and 4,913,876. Sufficient coolant is circulated through the central water channel, rods or tubes to keep the contained coolant largely or completely in the liquid phase, thus increasing the neutron moderation in the central and upper regions of the fuel rod assembly.

In the beginning of life of a fuel assembly, the U-235 fissile inventory is high and the reactivity is high (actually too high to be controlled by control rods alone). This high reactivity is compensated for by adding Gadolinium burnable absorber to the fuel at the time of manufacture. The added Gadolinium has the disadvantage of leaving a parasitic absorber residue which reduces the reactivity below the desired value at the fuel's end of life. The use of Gadolinium burnable absorber thus results in the loss of excess neutrons.

It is known to lower the core water flow in the first part of a fuel cycle and to increase it towards the end of the cycle. This "flow spectral shift effect" acts on the active flow used to cool the fuel rods and is limited to the applicable thermal margins for safe operation. Also, it acts similarly on all fuel assemblies in a core, regardless of the stage of their burn-up. The flow spectral shift causes significant skew in the power distribution which pushes the limits of the thermal margins and also results in increased neutron leakage or loss.

### Objects of the Invention

An object of the present invention is to provide a method for reducing the reactivity in a boiling water nuclear reactor at the beginning of the fuel's life, which does not have the residue problem that adding Gadolinium to the fuel rods has in the later stages of reactor operation.

A related object of the present invention is to provide a method of operating a nuclear reactor and particularly a fuel rod assembly thereof which alleviates the Gadolinium residue problem.

The present invention has the additional object of allowing a reduction of the Gadolinium quantities used as a bumable absorber and concomitantly allowing a reduction of the negative reactivity effect of Gadolinium residue.

Another object of the present invention is to provide a method for reducing the reactivity in the beginning of the fuel's life by displacing part of the moderator.

These and other objects of the present invention will be apparent from the descriptions and illustrations herein.

### Brief Description

This invention introduces the concept of optimized moderation enhancement in a boiling water nuclear reactor by effectively throttling the coolant moderator in the central or inner water channel or in one or more water rods, referred to herein as a moderator channel. The invention provides a method and associated apparatus for at least partially disabling the moderator channel in the first one or two cycles of reactor operation when such moderation is not advantageous, and for restoring the moderator channel in the remaining cycles of reactor operation when the moderator channel achieves the desired reactivity enhancement.

The invention can be used to reduce the dependence on burnable absorber, maximize the advantages of spectral shift operation, and generally optimize fuel and reload designs to significantly improve fuel cycle economy.

The present invention is thus directed to a method for controlling the moderating action of the coolant moderator (i.e., water) in a nuclear reactor with a fuel rod assembly having a moderator channel, i.e., an inner or central water channel, or one or more water rods. In accordance with the present invention, the method comprises at least partially blocking water from flowing through the water channel or the water rod during a first phase of reactor operation and subsequently opening the water channel or water rod to permit a greater degree of moderator flow therethrough during a second phase of reactor operations.

Preferably, the central or inner water channel or water rod is completely stopped during the first phase of reactor operation, for example, by a plug inserted into an end of the central water channel or water rod. Any water in the blocked central water channel or water rod is displaced by steam which has a negligible effect on neutron moderation. After the first phase of reactor operation, the central water channel or water rod is unstopped by removing the plug from the end of the central water channel or water rod, thereby permitting full water flow.

Alternatively, the central or inner water channel or water rod is partially stopped by an empty sealed rod disposed inside the central water channel or water rod during the first phase of reactor operation. In that case, the central water channel or water rod may be completely opened by simply removing the empty sealed rod from the central water channel or water rod or partially opened by replacing the empty sealed rod in the central water channel or water rod with an additional empty sealed rod having a different (smaller) diameter.

It is also possible, in accordance with the present invention, to modify the water flow by degrees, for example, so as to successively implement a closed, a partially closed, and an open flow condition. Thus, where the fuel assembly is provided with a plurality of water rods, the method may further comprise partially blocking water from flowing through the water rods during the first phase of reactor operation, and unblocking at least one and fewer than all of the water rods to permit a greater degree of water flow through the unblocked water rods during a third phase of reactor operation, the third phase occurring after the first phase (mostly closed) and prior to the second phase (mostly open).

A fuel assembly in a nuclear reactor comprises, in accordance with the present invention, an upper tie plate, a lower tie plate, a plurality of fuel rods extending from the lower tie plate to the upper tie plate, at least one central water chapel or water rod extending between the lower tie plate and the upper tie plate, and a gating element connected to the central water channel or water rod. The gating element serves to at least partially block water from flowing through the central water channel or water rod during a first phase of reactor operation. The gating element is selectively connected to the central water channel or water rod to enable the opening of the central water channel or water rod to permit more water flow through the central water channel or water rod during a second phase of reactor operation.

In accordance with the particular embodiments of the present invention discussed above, the gating element is a plug or an empty sealed rod. Where a plurality of water rods extend between the lower tie plate and the upper tie plate, each of the water rods may be provided with a respective gating element for partially blocking water from flowing through the respective one of the water rods during one phase of reactor operation. The respective gating elements are shiftably connected to the respective water rods for enabling an opening of the respective water rods to permit greater water flow therethrough during another phase of reactor operation.

Unlike the burnable absorber method of controlling the initial reactivity, the moderator displacement method of the present invention does not result in the loss of the excess neutrons. Instead, the reduced moderation reduces the percentage of the more reactive thermal neutrons while increasing the percentage of fast neutrons. The increased fast neutron flux (hardened neutron spectrum) results in the increased percentage of fast neutron absorption in U-238 inducing its transmutation into Pu-239. The increased production of the fissile plutonium isotopes is effective in increasing the energy content of the fuel assembly for the same initial enrichment, or equivalently allows the savings of using lower initial enrichment to generate the same quantity of energy from the fuel.

In contrast to the conventional flow spectral shift wherein the core water flow is lowered in the first part of a cycle and increased towards the end of the cycle, the "mechanical spectral shift" effect introduced by the present invention acts on the bypass flow and is not limited by the thermal safety margins. Also, the new spectral shift acts on each bundle in its own optimum way not as core-average manner. The flux and power skew problem will be mitigated as different neighboring bundles are in different plug-states. The present invention allows a reduction of the Gadolinium quantities used as a bumable absorber and concomitantly of the negative reactivity effect of its residue. The invention could also allow the reduction of the uranium enrichment and maximize plutonium conversion and utilization.

### Brief Description of the Drawing

Fig. 1 is a schematic partial side elevational view of a central water channel of a nuclear fuel rod assembly, showing an upper tie plate, a lower tie plate and a plurality of fuel rods, as well as a gating or stop element in the central water channel.

Fig. 2A is a schematic partial longitudinal cross-sectional view of the central water channel of Fig. 1, showing a particular embodiment of the gating or stop element in a position for blocking water flow through the central water channel during a first phase of reactor operation.

Fig. 2B is a view similar to Fig. 2A, showing the gating or stop element in another position which permits water flow through the central water channel during a subsequent phase of reactor operation.

Fig. 3A is a schematic partial longitudinal cross-sectional view of the central water channel of Fig. 1, depicting a modification of the central water channel and an embodiment of the gating or stop element in a position for completely blocking water flow through the central water channel.

Fig. 3B is a view similar to Fig. 3A, showing the gating or stop element in another position which permits partial water flow through the central water channel.

Fig. 3C is a view similar to Figs. 3A and 3B, showing the gating or stop element in a third position which permits essentially unimpeded water flow through the central water channel.

Figs. 4A-4C are schematic top views of the fuel rods and a multiple-tube modification of the central water channel in the assembly of Fig. 1, respectively illustrating successive stages of reactor operation wherein the central water channel is totally stopped, then partially stopped and subsequently completely opened to water flow.

Fig. 5A is a schematic partial longitudinal cross-sectional view of a central water channel of a nuclear fuel rod assembly, depicting an embodiment of a gating or stop element for partially blocking water flow through the central water channel.

Fig. 5B is a view similar to Fig. 5A, showing another gating or stop element in the central water channel of Fig. 5A, which permits greater water flow through the central water channel.

Fig. 5C is a view similar to Figs. 5A and 5B, showing the central water channel without a gating or stop element, thereby permitting unimpeded water flow through the central water channel.

Fig. 6 is a graph illustrating reactivity as a function of burnup calculated at 40% active flow void fraction, with two steps of water flow in the central water channel.

Fig. 7 is a graph similar to Fig. 6, illustrating the results of a case with only one water rod flow step.

### Description of the Preferred Embodiments

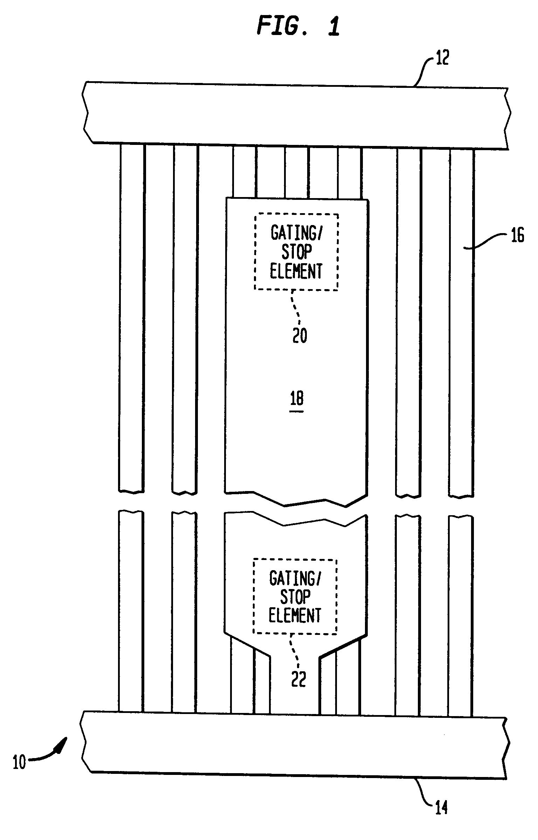

As illustrated diagrammatically in Fig. 1, a fuel rod assembly 10 for a nuclear reactor comprises an upper tie plate 12, a lower tie plate 14, a plurality of fuel rods 16 extending from the lower tie plate to the upper tie plate, and a central water channel or central moderator channel 18 extending between lower tie plate 14 and upper tie plate 16. Although not shown, an outer water channel which extends around the outer periphery of the fuel rods from the lower tie plate to the upper tie plate, as well as part length fuel rods, may be included in the fuel assembly. A gating or stop element 20 or 22 is connected to central water channel 18 respectively at an upper or lower end thereof. Each gating or stop element 20 and 22 is designed to at least partially block water moderator from flowing through central water channel 18 during a first phase of reactor operation, generally the first two or three cycles of reactor operation. Gating or stop element 20 or 22 is shiftably connected to central water channel 18 to enable opening of the central water channel to permit more water moderator flow therethrough during a second or subsequent phase of reactor operation.

Gating or stop element 20 or 22 enables an optimized moderation enhancement in a boiling water nuclear reactor. The gating or stop element 20 or 22 is a moderator throttle which at least partially disables the central water channel moderating action in the first two or three cycles of reactor operation when the moderation is not advantageous and which is removed or shifted to restore the central water channel moderating action in the remaining cycles of reactor operation when the central water channel achieves the desired reactivity enhancement.

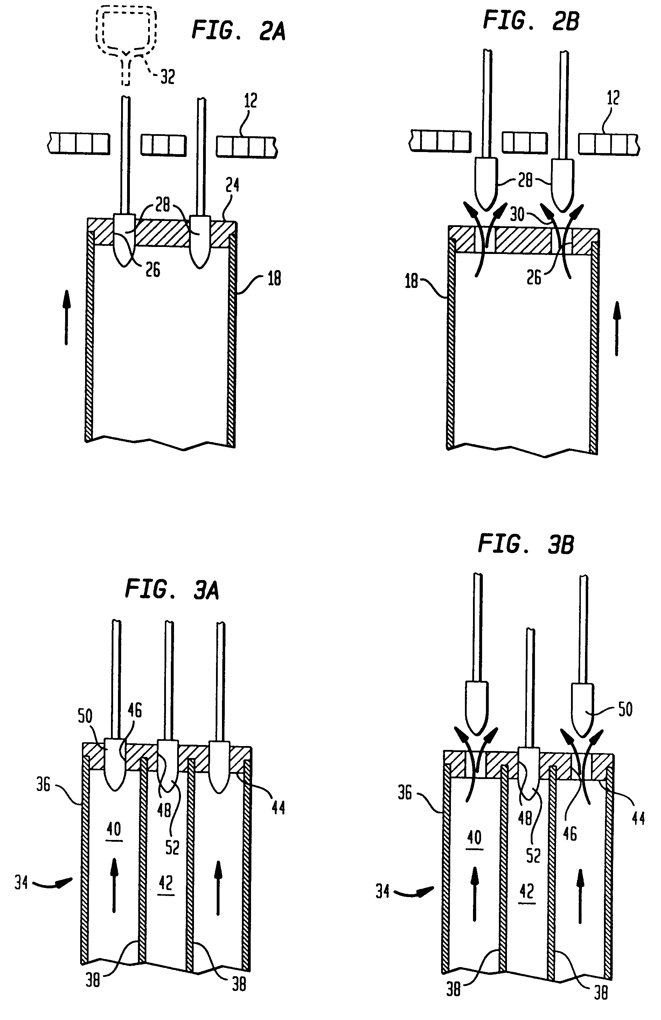

As illustrated in Figs. 2A and 2B, central water channel 18 is generally formed with an upper end fitting 24 provided with a plurality of flow holes 26 by which water moderator escapes from the central water channel. During one or more initial cycles of reactor operation, flow holes 26 are stopped by respective metal (e.g., zircaloy) plugs or stops 28 which collectively serve as gating element 20. After the first phase of reactor operation, plugs 28 are removed from flow holes 26, as illustrated in Fig. 2B, to permit unimpeded moderator flow through central water channel 18, as indicated by arrows 30. Generally, it is contemplated that plugs 28 are withdrawn from fuel rod assembly 10 after removal from flow holes 26. It is to be noted that plugs 28 have handles 32 which are larger than the space between fuel rods 16. Thus, if a plug 28 is dropped during its removal, it will not be lost and cause a loose part problem.

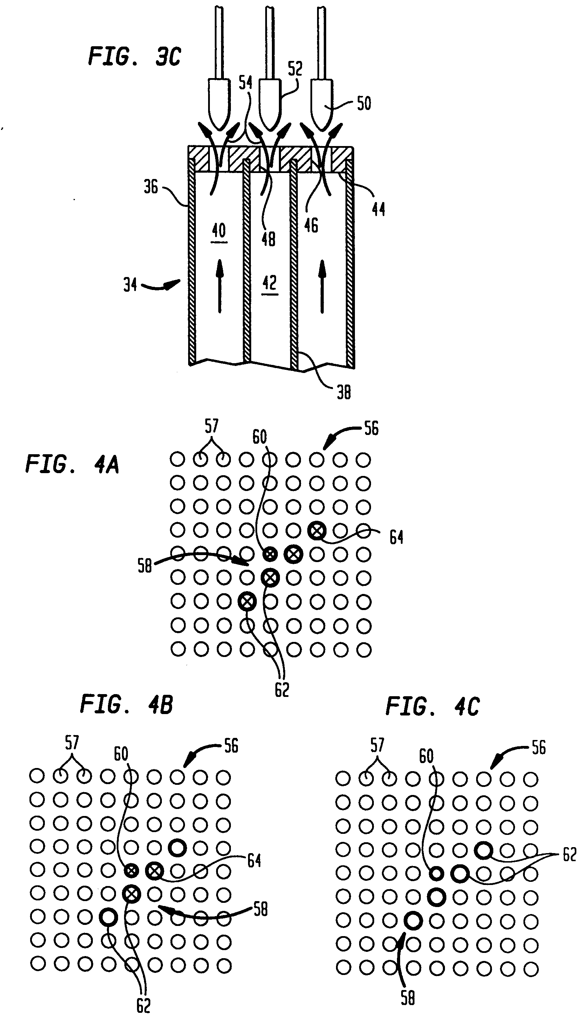

Figs. 3A-3C illustrate an embodiment 34 of central water channel 18 which includes a pair of nested walls 36 and 38 defining an outer water flow path 40 and an inner flow path 42. An upper end fitting 44 of central water channel 34 is provided with a plurality of first flow holes 46 which communicates with outer flow path 40 and is further provided with one or more second flow holes 48 which communicates with inner flow path 42. As shown in Fig. 3A, flow holes 46 and 48 are stopped by respective metal (e.g., zircaloy) plugs or stops 50 and 52 during one or more initial cycles of reactor operation. Subsequently, as shown in Fig. 3B, plugs 50 (or 52) are removed to enable unimpeded moderator flow along outer flow path 40 (or inner flow path 42) during a second phase of reactor operation (one or more operating cycles). The other plugs 52 (or 50) remain in place in their respective flow holes 48 (or 46) during this second phase of reactor operation, whereby the fuel rod assembly is partially moderated. During a third phase of reactor operation, the remaining plugs 52 (or 50) are also removed from their flow holes 48 (or 46), as depicted in Fig. 3C, to permit unimpeded moderator flow along both paths 40 and 42 through central water channel 34. Plugs 50 and 52 can be withdrawn from the fuel rod assembly through the upper tie plate after their removal from respective flow holes 50 and 52. However, plugs 50 and 52 can remain disposed below upper tie plate 12 (Fig. 1) and above upper end fitting 44 of central water channel 34. In that event, plugs 50 and 52 are configured to have a geometrical form for optimizing the flow of moderator (arrows 54) as it passes through flow holes 46 and 48 and enters the region above the central water channel 34. These considerations also apply to other plug-type gating or stop elements disclosed herein.

Figs. 4A-4C depict fuel rods 57 of a nuclear fuel assembly wherein the central water channel 58 takes the form of one small tubular water rod 60 and four large tubular water rods 62, in a bundle. During an initial phase of reactor operation continuing, for example, through two cycles, all of the water rods 60 and 62 are blocked, as schematically indicated by "X" marks 64 in Fig. 4A. During a subsequent second phase of reactor operation lasting, for example, one cycle, two of the four large water rods 62 are open while the remaining water rods are closed, as indicated by X marks 64 in Fig. 4B. Finally, during a subsequent third reactor operating phase, all water rods 60 and 62 are open, as indicated by the open thick-walled circles in Fig. 4C.

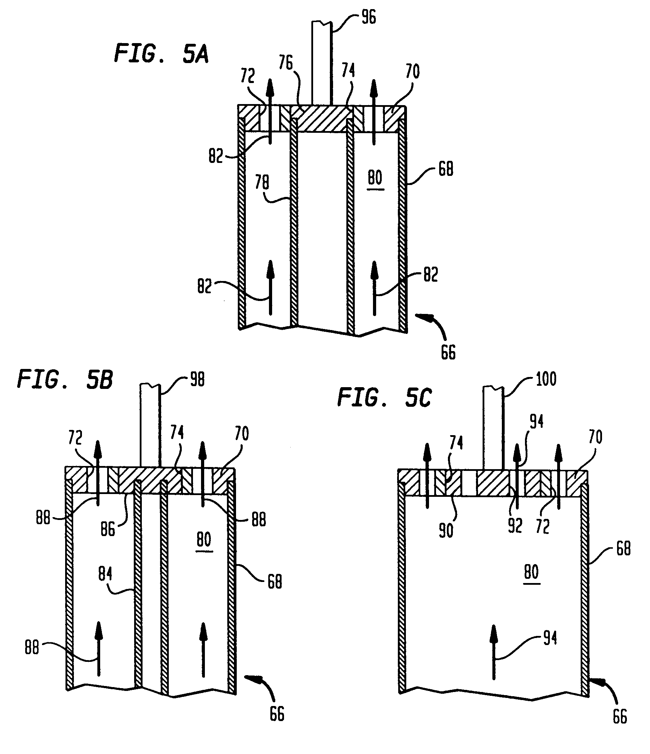

Figs. 5A through 5C illustrate another embodiment of the gating or stop element 20 discussed above and shown in Fig. 1. As depicted in Fig. 5A, a central water channel 66 includes an outer wall 68 and an upper end fitting or plate 70 to form a moderator flow duct 80. Upper end fitting 70 is provided with a plurality of flow holes 72 and a central opening 74 which receives an insert 76 to which a sealed empty tube or rod 78 is attached. Tube 78 which extends longitudinally through moderator flow duct 80 accordingly reduces the cross-sectional flow area of the duct. Arrows 82 indicate the flow of water moderator through duct 80 and flow holes 72. After an initial phase of reactor operation, e.g., two cycles, tube 78 is removed from central water channel 66 and replaced with a second sealed empty tube 84 of smaller cross-sectional area, as shown in Fig. 5B. Tube 84 is coupled at an upper end to a disk-shaped insert 86 which is received in an essentially fluid tight fit in opening 74. The moderator flow, indicated by arrows 88, through the unblocked or partially opened cross-section of duct 80 is now increased. At the end of this second phase of reactor operation typically lasting another cycle, tube 84 is removed from central water channel 66. A disk 90 optionally having flow holes 92 is then inserted into opening 74, as illustrated in Fig. 5C. Moderator flow, indicated by arrows 94, is again increased. Alternatively, opening 74 may be left open or unplugged, thereby enabling even greater moderator flow through central water channel 66. Inserts 76, 86 and 90 are each connected to respective shifting rods 96, 98 and 100 for enabling remote manipulation of the inserts and tubes 78 and 84 to change the moderator flow rate at predetermined times.

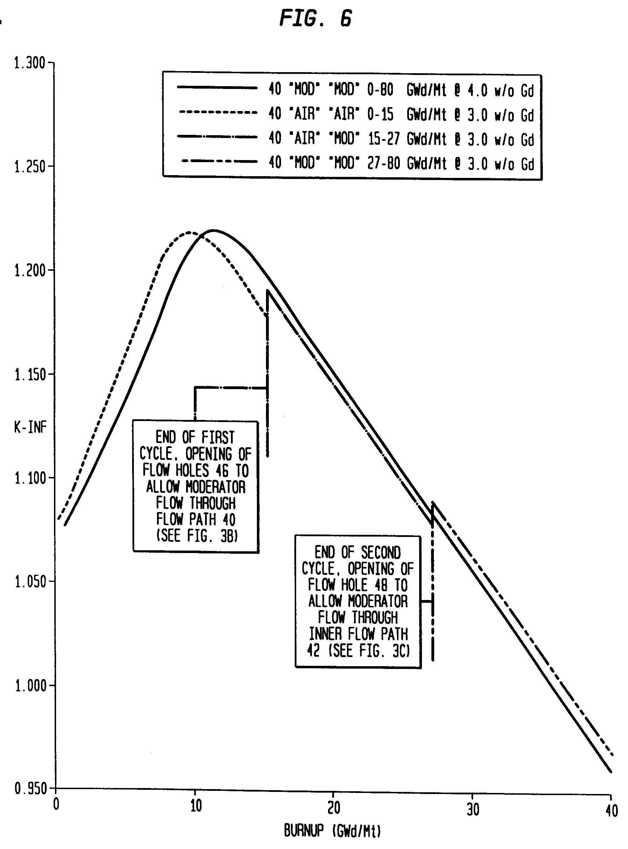

Fig. 6 is a graph illustrating reactivity as a function of burnup calculated at 40% active flow void fraction. In this example, two steps of water rod moderation are used with a 25% reduction of the Gadolinium absorber resulting in the same peak reactivity and a gain of 10 mK at the final burn-up of 40 gigawatt days per metric ton (GWD/MT). The gain in end reactivity is achieved by the reduction of residual absorber and increased plutonium production.

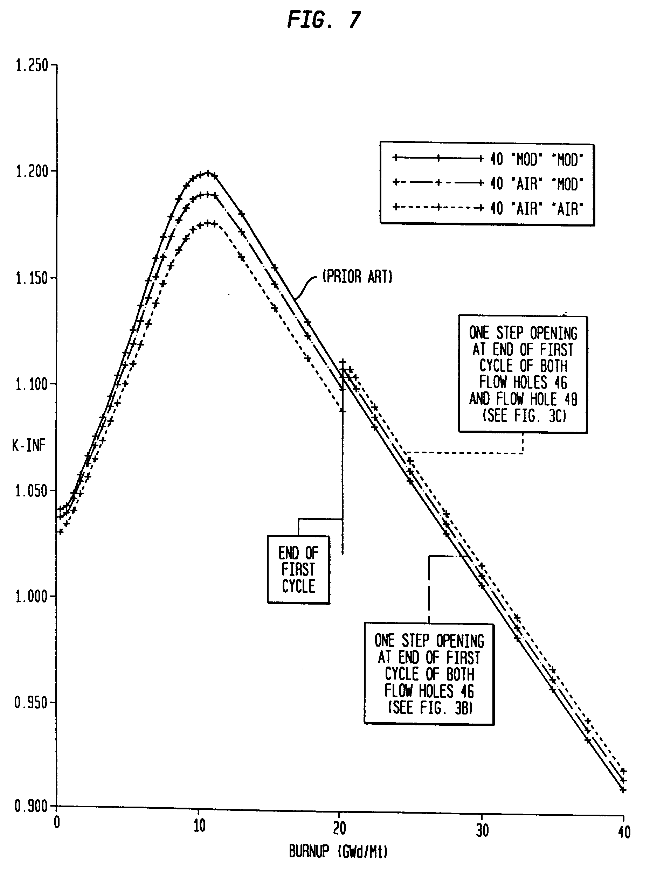

Fig. 7 is a graph illustrating reactivity as a function of burnup for a case with only one water rod flow step with the same Gadolinium quantity, and show the two anticipated advantages of lower peak reactivity and higher end reactivity.

Although the invention has been described in terms of particular embodiments and applications, one of ordinary skill in the art, in light of this teaching, can generate additional embodiments and modifications without departing from the spirit of or exceeding the scope of the claimed invention. Accordingly, it is to be understood that the drawings and descriptions herein are proffered by way of example to facilitate comprehension of the invention and should not be construed to limit the scope thereof.

## Claims

1. A method for controlling the moderating action of a coolant moderator in a nuclear reactor having a fuel assembly with at least one central moderator channel, comprising partially blocking moderator from flowing through the central moderator channel during a first phase of reactor operation and subsequently opening said central moderator channel to permit a greater degree of moderator flow through said central moderator channel during a second phase of reactor operation.

2. The method defined in claim 1 wherein said central moderator channel is completely stopped during said first phase of reactor operation by a plug inserted into an end of said central moderator channel, the opening of said central moderator channel including removing said plug from said end of said central moderator channel to permit full moderator flow through said central moderator channel.

3. The method defined in claim 1 wherein said central moderator channel is partially stopped by an empty sealed rod disposed inside said central moderator channel during said first phase of reactor operation, the opening of said central moderator channel including removing said empty sealed rod from said central moderator channel.

4. The method defined in claim 1 wherein said central moderator channel is partially stopped by an empty sealed rod disposed inside said central moderator channel during said first phase of reactor operation, the opening of said central moderator channel including replacing said empty sealed rod in said central moderator channel with an additional empty sealed rod having a different diameter.

5. The method defined in claim 1 wherein said central moderator channel includes a plurality of moderator rods, further comprising at least partially blocking moderator from flowing through said moderator rods during said first phase of reactor operation, and unblocking at least one and fewer than all of said moderator rods to permit a greater degree of moderator flow through the unblocked moderator rods during a third phase of reactor operation, said third phase occurring after said first phase and prior to said second phase.

6. A fuel assembly in a nuclear reactor, comprising:
an upper tie plate;
a lower tie plate;
a plurality of fuel rods extending from said lower tie plate to said upper tie plate;
at least one central moderator channel extending between said lower tie plate and said upper tie plate; and
a gating element connected to said central moderator channel for partially blocking moderator from flowing through the central moderator channel during a first phase of reactor operation, said gating element being selectively connected to said central moderator channel for enabling an opening of said central moderator channel to permit more moderator flow through said central moderator channel during a second phase of reactor operation.

7. The fuel assembly defined in claim 6 wherein said gating element is a plug removably disposed in an end of said central moderator channel during said first phase of reactor operation, the plug being removed to open said central moderator channel to permit full moderator flow through said central moderator channel.

8. The fuel assembly defined in claim 6 wherein said gating element is an empty sealed rod disposed inside said central moderator channel during said first phase of reactor operation, the empty sealed rod being removed to open said central moderator channel.

9. The fuel assembly defined in claim 6 wherein said gating element is an empty sealed rod disposed inside said central moderator channel during said first phase of reactor operation, the empty sealed rod being removed and replaced with another empty sealed rod having a different diameter.

10. The fuel assembly defined in claim 6, wherein said central moderator channel includes a plurality of moderator rods extending between said lower tie plate and said upper tie plate, each of said moderator rods being provided with a respective gating element for at least partially blocking moderator from flowing through the respective one of said moderator rods during one phase of reactor operation, the respective gating element being shiftably connected to the respective one of said moderator rods for enabling an opening of said respective one of said moderator rods to permit greater moderator flow through said respective one of said moderator rods during another phase of reactor operation.
